# EUROPÄISCHE PATENTSCHRIFT

(11) **EP 3 007 874 B1**
(45) Veröffentlichungstag und Bekanntmachung des Hinweises auf die Patenterteilung: **07.03.2018**
(21) Anmeldenummer: 14746934.0
(22) Anmeldetag: 10.06.2014
(51) Int. Cl.: B29C 41/28, B29C 33/02

(54) **HEIZ- ODER KÜHLBARE UMLENKTROMMEL FÜR EINE BANDGIESSANLAGE**
HEATABLE OR COOLABLE RETURN PULLEY FOR A CONTINUOUS CASTING SYSTEM
TAMBOUR DE RENVOI POUVANT ÊTRE CHAUFFÉ OU REFROIDI, DESTINÉ À UNE INSTALLATION DE COULÉE EN BANDE

(30) Priorität: 10.06.2013 AT 503772013
(43) Veröffentlichungstag der Anmeldung: 20.04.2016
(73) Patentinhaber: Berndorf Band GmbH, 2560 Berndorf (AT)
(72) Erfinder: MORGENBESSER, Karl, 2870 Aspang (AT)
(74) Vertreter: Burger, Hannes
(86) Internationale Anmeldenummer: PCT/AT2014/050130
(87) Internationale Veröffentlichungsnummer: WO 2014/197918

(56) Entgegenhaltungen:
- WO-A1-2006/106895
- WO-A2-2011/074829
- WO-A2-2011/074829
- US-A1- 2006 214 319
- US-A1- 2006 214 319
- US-A1- 2007 075 449

## Beschreibung

Die Erfindung betrifft eine Umlenktrommel für eine Bandgießanlage, umfassend einen trommelförmigen Grundkörper und zumindest ein unterhalb einer zylinderförmigen Oberfläche der Trommel verlegtes Heizrohr, wobei das Heizrohr/die Heizrohre je zumindest einen Eingang (Vorlauf) und je zumindest einen dazu versetzt angeordneten Ausgang (Rücklauf) aufweist/aufweisen und die Summe der Eingänge und Ausgänge wenigstens drei beträgt.

Umlenktrommeln beziehungsweise Umlenkrollen der genannten Art sind grundsätzlich bekannt und werden beispielsweise für die Führung eines endlosen Metallbands, das Bestandteil einer Bandgießanlage ist, eingesetzt. In einer Bandgießanlage wird ein vorzugsweise flüssiges oder pastöses Grundmaterial auf das genannte Metallband aufgetragen und anschließend in eine Platte oder einen Film mit zumeist gleichmäßiger Dicke umgeformt. Häufig ist es für den Produktionsvorgang erforderlich, dass das Metallband beheizt wird, um einen möglichst guten und homogenen Materialauftrag während des Gießens zu ermöglichen. Gemäß dem Stand der Technik erfolgt die Beheizung des Metallbands über die Umlenktrommel, um welche das Metallband geführt ist. Dazu durchläuft ein flüssiges Heizmedium ein in dem Inneren der Trommel helixförmig um die Längsachse angeordnetes Heizrohr. Auf einem längsseitigen Ende der Umlenktrommel wird die Flüssigkeit eingeleitet, auf dem anderen Ende wieder ausgeleitet. Aufgrund des vergleichsweise langen Weges durch die Trommel entsteht im Heizmedium und somit auch in der Trommel und auf dem Metallband ein Temperaturgradient, das heißt die Trommel/das Metallband ist auf einer Seite wärmer als auf der anderen. Durch diese inhomogene Temperaturverteilung auf der Trommel/dem Metallband kann es nun zu Zonen unterschiedlicher Verfestigung in dem aufgetragenen Grundmaterial/Film kommen, was Spannungen und Beschädigungen des aufgetragenen Grundmaterials/Films zur Folge haben kann.

Die WO 2011/074829 offenbart dazu eine Vorrichtung zur Herstellung eines optischen Films mit Hilfe einer teflonbeschichteten Walze mit einer Fluorharzschicht auf der äußeren Umfangsfläche. Die Walze kann mit zwei gegenläufig durchflossenen Heizwendeln beheizt werden.

Die US 2006/214319 offenbart weiterhin ein Verfahren zur Herstellung eines optischen Films, bei dem eine Schmelze aus einer Düse auf eine walzenförmigen Kühltrommel extrudiert wird. Die Kühltrommel ist in mehrere Bereiche unterteilt, deren Temperatur unabhängig voneinander gesteuert werden kann.

Eine Aufgabe der Erfindung ist es nun, eine verbesserte Umlenktrommel anzugeben. Insbesondere soll eine weitgehend gleichmäßige Temperaturverteilung auf der Umlenktrommel/dem Metallband erreicht oder der Temperaturgradient auf der Trommel/dem Metallband gegenüber dem Stand der Technik wenigstens verringert werden sowie eine Temperatur gut auf einem gewünschten Niveau gehalten werden.

Die Aufgabe der Erfindung wird mit einer Umlenktrommel der eingangs genannten Art gelöst, zusätzlich umfassend
- ein steuerbares Ventil an einem Eingang oder Ausgang eines Heizrohrs,
- einen Temperatursensor in einem von dem genannten Ventil beeinflussten Bereich/Abschnitt des Heizrohrs respektive der Umlenktrommel und
- eine Regelung, deren Eingang für einen Ist-Wert mit dem genannten Temperatursensor und deren Ausgang für eine Stellgröße mit dem genannten Ventil verbunden ist.

Durch die vorgeschlagenen Maßnahmen wird eine Verteilung der Wärmeströme innerhalb der Umlenktrommel und damit eine Angleichung der Temperaturen der einzelnen Areale der Umlenktrommel erreicht. Das heißt, die Temperaturverteilung auf der Umlenktrommel ist gegenüber dem Stand der Technik gleichmäßiger, beziehungsweise ist der Temperaturverlauf flacher und der Temperaturgradient geringer als bei bekannten Umlenktrommeln. Darüber hinaus können einzelne Bereiche der Umlenktrommel gezielt beheizt/gekühlt werden und die Temperatur in den einzelnen Abschnitten der Umlenktrommel besonders gut auf einem gewünschten Niveau gehalten werden. Denkbar ist der Einsatz von Schaltventilen aber auch stellbaren Ventilen.

Die Aufgabe der Erfindung wird insbesondere auch mit einer Umlenktrommel der eingangs genannten Art gelöst, bei der ein unterhalb einer zylinderförmigen Oberfläche der Trommel verlegtes erstes Heizrohr vorgesehen ist und:
a) das erste Heizrohr zumindest einen Eingang und zumindest einen dazu versetzt angeordneten Ausgang aufweist, wobei die Summe der Eingänge und Ausgänge wenigstens drei beträgt, oder
b) zumindest ein unterhalb der zylinderförmigen Oberfläche der Trommel verlegtes zweites Heizrohr vorgesehen ist, wobei Abschnitte des ersten Heizrohrs in dessen Querrichtung einander benachbart sind und Abschnitte des zumindest zweiten Heizrohrs in dessen Querrichtung einander benachbart sind, oder
c) zumindest ein unterhalb der zylinderförmigen Oberfläche der Trommel verlegtes zweites Heizrohr vorgesehen ist, wobei Abschnitte des ersten Heizrohrs und des zumindest zweiten Heizrohrs in deren Querrichtung einander benachbart und für einen gegenläufigen Durchfluss eingerichtet sind.

Im Fall a) weist das erste Heizrohr somit zumindest einen Eingang und zwei Ausgänge oder zumindest einen Ausgang und zwei Eingänge auf. Auf diese Weise wird eine Aufteilung der Wärmeströme und damit eine gleichmäßigere Temperaturverteilung auf der Umlenktrommel erreicht. Um den Temperaturgradienten auf der Umlenktrommel weiter zu verringern, kann die Anzahl der Eingänge und Ausgänge auch auf insgesamt über drei erhöht werden.

Im Fall b) bilden die Heizrohre getrennte Heizblöcke, konkret einen ersten und einen zumindest zweiten Heizblock, welche einander nicht oder wenigstens nicht vollständig überlappen. Durch eine getrennte Versorgung der Heizblöcke kann ebenfalls eine Verbesserung, das heißt Verringerung des Temperaturgradienten auf der Heiztrommel, erreicht werden. Je mehr unterschiedliche Heizrohre vorgesehen werden, umso besser gelingt die Angleichung der Temperatur der unterschiedlichen Areale der Umlenktrommel.

Im Fall c) bilden die Heizrohre einander überlappende Heizblöcke, konkret einen ersten und einen zumindest zweiten Heizblock, welche wenigstens nicht vollständig voneinander getrennt sind. Diese Heizblöcke werden dabei im Gegenstrom durchflossen. Durch die gegensinnige Durchströmung der Heizrohre kann ebenfalls eine Verbesserung des genannten Temperaturgradienten erzielt werden.

Die Fälle a) bis c) können auch in beliebiger Kombination angewandt werden. Mögliche Kombinationen sind daher: a)+b); a)+c); b)+c) sowie a)+b)+c).

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn mehrere Eingänge an einen Verteiler respektive ein Verteilrohr und mehrere Ausgänge an einen Sammler respektive an ein Sammelrohr angeschlossen sind. Durch die relativ kurzen Wege in einem Verteilrohr/Verteiler ergeben sich nahezu gleiche Temperaturen an den verschiedenen Eingängen. Dieser Effekt kann noch verstärkt werden, wenn das Verteilrohr / der Verteiler einen relativ großen Querschnitt aufweist und damit ein vergleichsweise großes Volumen eines Wärmeträgers aufnehmen kann. Ein weiterer Effekt von Verteilrohr/Verteiler und Sammelrohr/Sammler ist, dass das Rohrsystem insgesamt vereinfacht wird. Dies wirkt sich dann besonders aus, wenn der Verteiler / das Verteilrohr beziehungsweise der Sammler / das Sammelrohr innerhalb der Trommel angeordnet sind, da dann nur wenige Rohre in die beziehungsweise aus der Trommel führen. Im Extremfall reicht eine Zuführleitung in die Trommel und eine Abfuhrleitung aus der Trommel aus. Denkbar ist aber auch, dass der Verteiler / das Verteilrohr beziehungsweise der Sammler / das Sammelrohr außerhalb der Trommel angeordnet sind. Auf diese Weise können beispielsweise Wartungsarbeiten am Rohrsystem vereinfacht werden.

Günstig ist es, wenn das erste Heizrohr und das zumindest eine zweite Heizrohr im Wesentlichen helixförmig oder im Wesentlichen mäanderförmig verlegt sind. Dadurch können die einzelnen Bereiche der Umlenktrommel vergleichsweise gleichmäßig beheizt/gekühlt werden. "Im Wesentlichen helixförmig" oder "im Wesentlichen mäanderförmig" bedeutet in dem gegebenen Zusammenhang nicht, dass zum Beispiel eine Zuführabschnitt oder eine Abführabschnitt des Heizrohrs notwendigerweise helixförmig respektive mäanderförmig verlegt sein müsste. Diese können beispielsweise auch gerade verlaufen.

Günstig ist es, wenn das Heizrohr größtenteils parallel zur Achse der Trommel verlegt ist. Auf diese Weise ergibt sich bei der Durchströmung des Heizrohrs mit einem Wärmeträger ein im Wesentlichen in Umfangsrichtung verlaufender Temperaturgradient. Entlang einer Erzeugenden der Trommel ist die Temperatur dagegen vorteilhaft im Wesentlichen konstant.

Günstig ist es aber auch, wenn das Heizrohr größtenteils entlang einer Helix verlegt ist, deren Achse parallel zur Achse der Trommel verläuft oder mit dieser identisch ist. Auf diese Weise ergibt sich bei der Durchströmung des Heizrohrs mit einem Wärmeträger ein im Wesentlichen in Längsrichtung verlaufender Temperaturgradient. Entlang des Umfangs der Trommel ist die Temperatur dagegen vorteilhaft im Wesentlichen konstant.

Günstig ist es schließlich auch, wenn anstelle eines Heizrohrs ein Heizstab vorgesehen ist. Auf diese Weise kann der Einsatz eines Wärmeträgers in der Trommel vermieden werden. Generell sind die Heizrohre ja für die Leitung eines flüssigen, dampf- oder gasförmigen Wärmeträgers, beispielsweise Heißwasser oder Kühlwasser, Dampf oder ein Kältemittel eingerichtet. Heizstäbe werden dagegen beispielsweise von einem elektrischen Strom durchflossen. Ein Austritt eines Wärmeträgers an einer Leckstelle des Rohrsystems ist damit ausgeschlossen.

Vorzugsweise ist die vorgestellte Umlenktrommel Teil einer Bandgießanlage, wobei ein Metallband um diese umläuft. Durch die weitgehend konstante Temperatur auf der Umlenktrommel gelingt die Herstellung von Platten, Filmen und sonstigen Halbzeugen besonders gut.

Zum besseren Verständnis der Erfindung wird diese anhand der nachfolgenden Figuren näher erläutert. Es zeigen:
- Fig. 1: eine schematische Darstellung einer ersten Umlenktrommel, bei dem ein helixförmig verlegtes Heizrohr einen Eingang und zwei Ausgänge aufweist;
- Fig.2: wie Fig. 1, nur mit mehreren verteilen Ein- und Ausgängen;
- Fig. 3: eine schematische Darstellung einer Umlenktrommel mit zwei räumlich getrennten Heizspiralen;
- Fig. 4: eine schematische Darstellung einer Umlenktrommel mit drei räumlich getrennten Heizspiralen, die an ein Verteilrohr beziehungsweise ein Sammelrohr angeschlossen sind;
- Fig. 5: wie Fig. 4, nur mit einem außerhalb der Umlenktrommel angeordneten Verteiler beziehungsweise Sammler;
- Fig. 6: eine schematische Darstellung einer Umlenktrommel mit zwei nebeneinander geführten und gegenläufig durchflossenen Heizspiralen;
- Fig. 7: eine schematische Darstellung einer Umlenktrommel mit zwei einander überlappenden, gegenläufig durchflossenen und mäanderförmig verlegten Heizrohren;
- Fig. 8: eine schematische Darstellung einer weiteren Umlenktrommel mit zwei nebeneinander geführten, gegenläufig durchflossenen und mäanderförmig verlegten Heizrohren;
- Fig. 9: wie Fig. 5, nur mit steuerbaren Ventilen an den Eingängen der Heizspiralen und einer Temperaturregelung mit in der Umlenktrommel verteilten Temperatursensoren und
- Fig. 10: eine schematisch dargestellte Bandgießanlage.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

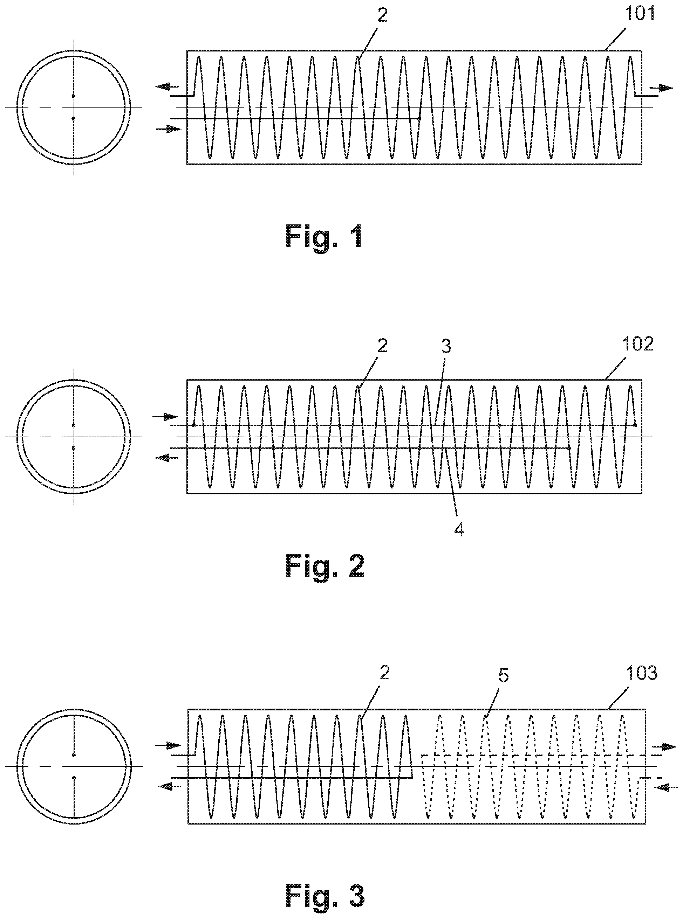

Fig. 1 zeigt eine schematische Darstellung einer Umlenktrommel 101, umfassend ein unterhalb einer zylinderförmigen Oberfläche der Trommel 101 verlegtes erstes Heizrohr 2, welches im Wesentlichen helixförmig verlegt ist. Das erste Heizrohr 2 weist einen Eingang und zwei dazu versetzt angeordnete Ausgänge auf (Fall a). Die Summe der Eingänge und Ausgänge (in den Figuren jeweils mit Pfeilen bezeichnet) beträgt daher genau drei. Durch die beiden Ausgänge werden zwei getrennt im Heizrohr 2 verlaufende Wärmeströme erzeugt, wodurch die Umlenktrommel 101 weitgehend gleichmäßig temperiert ist.

"Im Wesentlichen helixförmig" bedeutet in diesem Beispiel, dass die gerade verlaufenden Abführabschnitte des Heizrohrs 2 die Spiralform des Heizrohrs 2 nur unwesentlich beeinträchtigen, beziehungsweise nur einen geringen Anteil am Heizrohr 2 haben. Die Achse der Helix ist in diesem Beispiel identisch mit der Achse der Trommel 101. Sie könnte aber auch parallel dazu liegen oder auch in einer ganz anderen Richtung verlaufen, insbesondere auch entlang einer gekrümmten Linie. Im Speziellen kann das Heizrohr 2 auch als Doppel-Helix (Helix entlang einer helixförmigen Achse) ausgebildet sein. Durch den helixförmigen Verlauf des Heizrohrs 2 ergibt sich ein im Wesentlichen in Längsrichtung der Trommel 101 verlaufender Temperaturgradient. Entlang des Umfangs der Trommel 101 ist die Temperatur dagegen abschnittsweise im Wesentlichen konstant. An dieser Stelle wird angemerkt, dass ein helixförmiges Heizrohr im Rahmen der Erfindung der leichteren begrifflichen Verständlichkeit halber wie allgemein üblich als "Heizspirale" bezeichnet wird.

Die Fig. 2 zeigt eine schematische Darstellung einer Umlenktrommel 102, welche der Umlenktrommel 101 aus der Fig. 1 sehr ähnlich ist. Im Unterschied dazu weist das Heizrohr 2 jedoch vier Eingänge und drei Ausgänge auf. Zudem sind die Eingänge an einen Verteiler respektive ein Verteilrohr 3 und die Ausgänge an einen Sammler respektive an ein Sammelrohr 4 angeschlossen (Fall a). Das Verteilrohr 3 beziehungsweise das Sammelrohr 4 sind in diesem Beispiel innerhalb der Trommel 102 angeordnet, wodurch lediglich zwei Rohre nach außen geführt werden müssen.

Durch die gegenüber der in der Fig. 1 dargestellten Umlenktrommel 101 erhöhte Anzahl an Eingängen und Ausgängen ist die Temperaturverteilung auf der Umlenktrommel 102 noch gleichmäßiger. Durch die relativ kurzen Wege im Verteilrohr 3 ergeben sich nahezu gleiche Temperaturen an den verschiedenen Eingängen. Dieser Effekt kann noch verstärkt werden, wenn das Verteilrohr 3 einen relativ großen Querschnitt aufweist und damit ein vergleichsweise großes Volumen eines Wärmeträgers aufnehmen kann.

Fig. 3 zeigt nun eine schematische Darstellung einer Umlenktrommel 103 mit zwei räumlich getrennten Heizspiralen 2 und 5. Das heißt, es ist ein unterhalb der zylinderförmigen Oberfläche der Trommel 103 verlegtes zweites Heizrohr 5 vorgesehen, wobei Abschnitte des ersten Heizrohrs 2 in dessen Querrichtung einander benachbart sind und Abschnitte des zumindest zweiten Heizrohrs 5 in dessen Querrichtung einander benachbart sind (Fall b). Es ergeben sich somit zwei (voneinander getrennte) "Heizblöcke" und damit wiederum eine gleichmäßige Temperatur auf der Umlenktrommel 103.

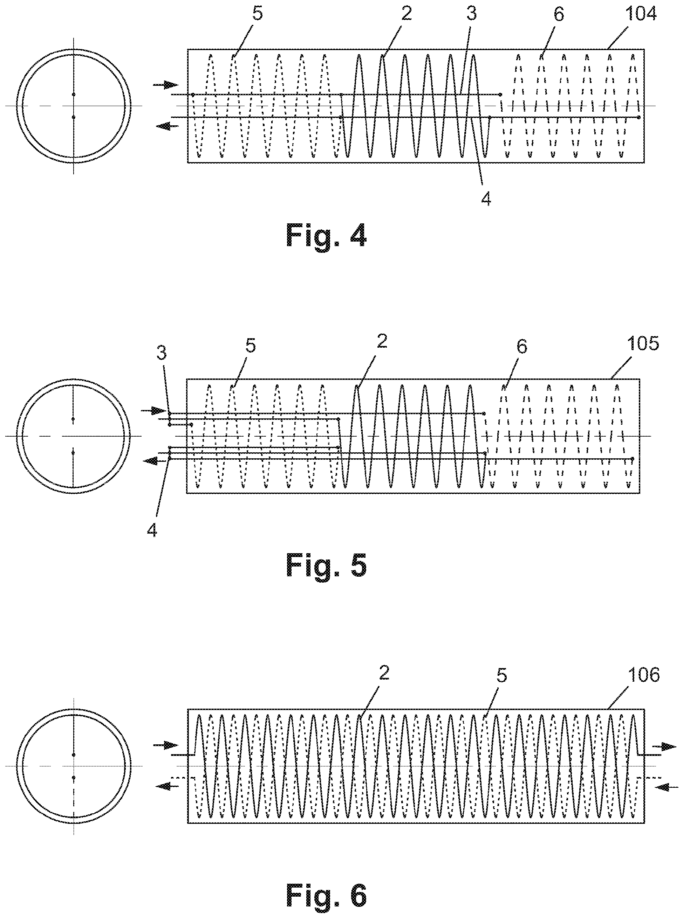

Fig. 4 zeigt darüber hinaus eine schematische Darstellung einer Umlenktrommel 104, welcher der Umlenktrommel 103 aus der Fig. 3 sehr ähnlich ist. Im Unterschied dazu weist diese aber drei räumlich getrennte Heizspiralen, 2, 5 und 6 auf, die an einen Verteiler / ein Verteilrohr 3 beziehungsweise einen Sammler / ein Sammelrohr 4 angeschlossen sind (Fall b). Die Temperatur auf der Umlenktrommel 104 ist somit noch gleichmäßiger.

Fig. 5 zeigt weiterhin eine Umlenktrommel 105, welcher der in Fig. 4 dargestellten Umlenktrommel 104 sehr ähnlich ist. Im Unterschied dazu sind die Zu- und Ableitungen der Heizrohre 2, 5 und 6 jedoch gesondert nach außen geführt und an einen außerhalb der Umlenktrommel 105 angeordneten Verteiler 3 beziehungsweise Sammler 4 angeschlossen (Fall b).

Fig. 6 zeigt nun eine schematische Darstellung einer Umlenktrommel 106 mit zwei nebeneinander geführten und gegenläufig durchflossenen Heizspiralen 2 und 5. Es ist also ein unterhalb der zylinderförmigen Oberfläche der Trommel 106 verlegtes zweites Heizrohr 5 vorgesehen, wobei Abschnitte des ersten Heizrohrs 2 und des zweiten Heizrohrs 5 in deren Querrichtung einander benachbart und für einen gegenläufigen Durchfluss eingerichtet sind (Fall c). In der Fig. 6 sind lediglich zwei gegenläufig durchströmte Heizrohre 2 und 5 vorgesehen, selbstverständlich könnten aber auch mehr als zwei parallel verlegte Heizrohre vorgesehen sein. Durch die dargestellte Maßnahme ergibt sich ebenfalls ein weitgehend gleichmäßiger Temperaturverlauf auf der Trommel 106.

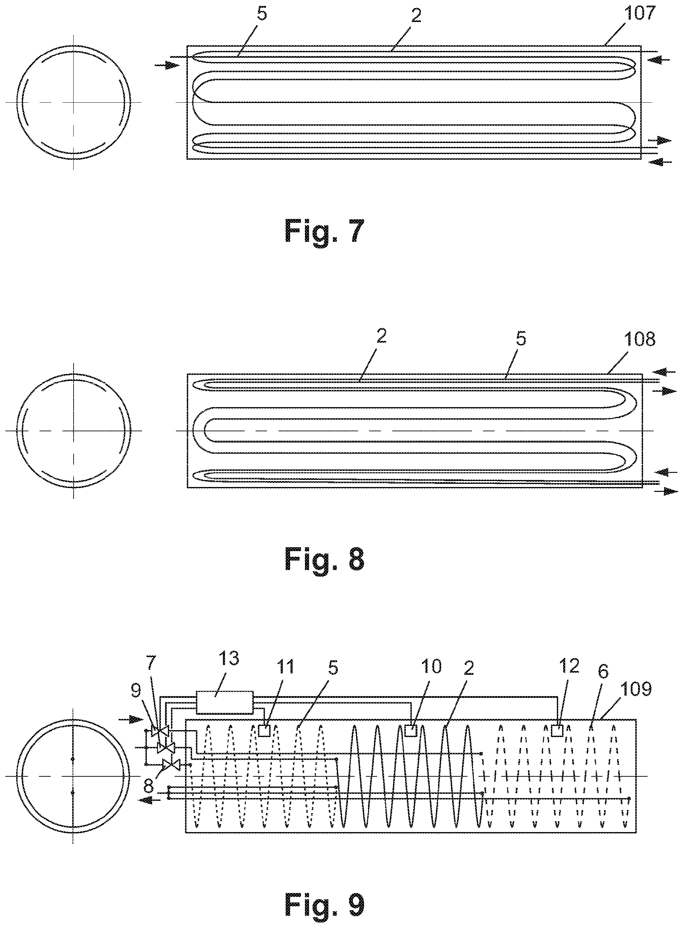

Fig. 7 zeigt eine schematische Darstellung einer Umlenktrommel 107 mit zwei einander überlappenden, gegenläufig durchflossenen und mäanderförmig verlegten Heizrohren 2 und 5. Die Heizrohre 2 und 5 sind dabei größtenteils parallel zur Achse der Trommel 107 verlegt, und je ein Abschnitt des ersten Heizrohrs 2 ist benachbart zu je einem Abschnitt des zweiten Heizrohr 5 angeordnet. Durch den mäanderförmigen Verlauf der Heizrohre 2 und 5, respektive dadurch, dass diese größtenteils parallel zur Achse der Trommel 107 verlegt sind, ergibt sich ein im Wesentlichen in Umfangsrichtung der Trommel 107 verlaufender Temperaturgradient. Entlang einer Erzeugenden der Trommel 107 ist die Temperatur dagegen vorteilhaft im Wesentlichen konstant.

Fig. 8 zeigt eine weitere schematische Darstellung einer Umlenktrommel 108 mit gegenläufig durchflossenen und mäanderförmig verlegten Heizrohren 2 und 5, die aber in diesem Beispiel nebeneinander ("parallel") geführt sind. Daher sind je zwei Abschnitte des ersten Heizrohrs 2 benachbart zu je zwei Abschnitten des zweiten Heizrohrs 5 angeordnet.

Generell weisen die in den einzelnen Varianten vorgesehenen Heizrohre 2, 5 und 6 je zumindest einen Eingang und je zumindest einen dazu versetzt angeordneten Ausgang auf, wobei die Summe der Eingänge und Ausgänge wenigstens drei beträgt. Dadurch kann eine über die Umlenktrommel 101..108 weitgehend gleichmäßige Temperatur erzielt werden.

In der Regel wird eine über die Umlenktrommel 101..106 gleichmäßig verlaufende Temperatur angestrebt werden. Vorstellbar ist aber auch, dass die Umlenktrommel 101..108 gezielt unterschiedlich beheizt wird. Beispielsweise kann es von Vorteil sein, den mittleren Bereich der Umlenktrommel 104, 105 (Fig. 4 und Fig. 5) etwas stärker zu erwärmen als deren Randbereiche um das Verfließen des mit der Umlenktrommel 104, 105 gegossenen Materials zu begünstigen.

Fig. 9 zeigt nun eine erfindungsgemäße Umlenktrommel, welche in ihrer Grundform der in Fig. 5 dargestellten Umlenktrommel 105 ähnelt. Im Unterschied dazu sind an den Eingängen der Heizspiralen 2, 5 und 6 jedoch steuerbare Ventile 7, 8 und 9 vorgesehen. Darüber hinaus sind in der Umlenktrommel 109 verteilte Temperatursensoren 10, 11 und 12 vorgesehen, wobei in diesem Beispiel je ein Temperatursensor 10, 11 und 12 im Bereich je einer Heizspirale 2, 5 und 6 angeordnet ist. Schließlich umfasst die Anordnung auch eine Temperaturregelung 13, an welche die Ventile 7, 8 und 9 und die Temperatursensoren 10, 11 und 12 angeschlossen sind. Die Umlenktrommel 109 umfasst also Temperatursensoren 10, 11 und 12 in den von den Ventilen 7, 8 und 9 beeinflussten Abschnitten des Heizrohrs respektive der Umlenktrommel 109 sowie eine Regelung 13, deren Eingänge für Ist-Werte mit den genannten Temperatursensoren 10, 11 und 12 und deren Ausgänge für eine Stellgröße mit den genannten Ventilen 7, 8 und 9 verbunden sind. Die Ventile 7, 8 und 9 können als Schaltventile oder einstellbare Ventile (mit einem variablen Durchflussquerschnitt) vorgesehen sein. Die Schaltventile können dabei auch getaktet sein, um einen quasi-einstellbaren Durchfluss zu bewirken.

Die Funktion der dargestellten Anordnung ist nun wie folgt:
Wird von der Regelung 13 an einem Temperatursensor 10, 11 oder 12 eine Abweichung der Ist-Temperatur von einer Soll-Temperatur festgestellt, so wird das zugeordnete Ventil 7, 8 oder 9 dementsprechend angesteuert, um dieser Abweichung entgegenzuwirken. Ist als Wärmeträger beispielsweise eine Heizflüssigkeit vorgesehen und liegt die Ist-Temperatur unter der Soll-Temperatur, so wird das entsprechende Ventil 7, 8 oder 9 (weiter) geöffnet. Liegt die Ist-Temperatur oberhalb der Soll-Temperatur, so wird das Ventil 7, 8 oder 9 dementsprechend (weiter) geschlossen. Ist als Wärmeträger eine Kühlflüssigkeit vorgesehen, so sind die Verhältnisse entsprechend umgekehrt. Selbstverständlich kann auch im Zuflussbereich (Vorlauf) der Heizrohre 2, 5 und 6 ein Temperatursensor vorgesehen sein, um festzustellen, ob entsprechend der festgestellten Temperaturdifferenz zwischen Soll- und Ist-Temperatur und der gemessenen Vorlauftemperatur das betreffende Ventil 7, 8 oder 9 nun zu öffnen oder zu schließen ist.

In der in Fig. 9 dargestellten Anordnung sind die steuerbaren Ventile 7, 8 und 9 an den Eingängen der Heizrohre 2, 5 und 6 angeordnet. Selbstverständlich könnten sie aber auch an deren Ausgängen oder an einer anderen Stelle des Verlaufs der Heizrohre 2, 5 und 6 angeordnet sein.

In den dargestellten Beispielen sind die Heizrohre 2, 5 und 6 stets an die Stirnseiten der Trommeln 101..109 geführt. Dies ist aber nicht zwingend der Fall. Denkbar wäre auch, dass die Ein- und Ausgänge umfangsseitig angeordnet sind. In beiden Fällen sind - da die Trommel 101.. 109 ja bewegt ist - entsprechende Dichtungssysteme vorzusehen, die aber aus dem Stand der Technik grundsätzlich bekannt sind.

Generell sind die Heizrohre 2, 5 und 6 für die Leitung eines flüssigen, dampf- oder gasförmigen Wärmeträgers, beispielsweise Heißwasser oder Kühlwasser, Dampf oder ein Kältemittel eingerichtet. Anstelle der Heizrohre 2, 5 und 6 könnten aber auch Heizstäbe vorgesehen sein, welche beispielsweise von einem elektrischen Strom durchflossen werden.

An dieser Stelle wird auch darauf hingewiesen dass die Begriffe "Heizrohr" und "Heizstab" synonymisch auch für "Kühlrohr" und "Kühlstab" gelten und eine mögliche Kühlwirkung nur der besseren Lesbarkeit halber nicht an jeder Stelle der Anmeldung angegeben wurde.

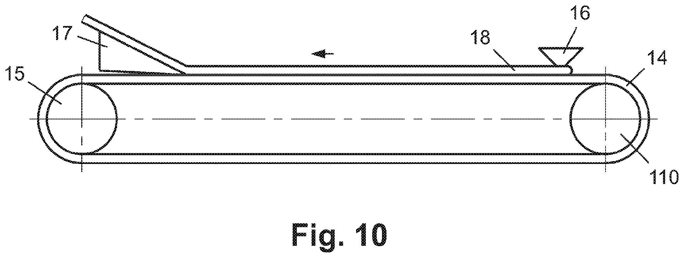

Fig. 10 zeigt nun abschließend eine schematisch dargestellte Bandgießanlage, umfassend eine Umlenktrommel 110 und ein um diese laufendes Metallband 14, welches am anderen Ende um eine weitere Rolle 15 geführt ist. Weiterhin umfasst die Bandgießanlage einen Einfülltrichter 16 sowie einen Abhebekeil 17. Ein in den Einfülltrichter 16 eingefülltes (pastöses oder flüssiges) Grundmaterial 18 wird auf das Metallband 14 aufgetragen und verläuft auf diesem, beziehungsweise kann auch durch einen Spalt zwischen dem Metallband 14 und einer weiteren nicht dargestellten Trommel gepresst werden. Das Grundmaterial 18 wird vom Metallband 14 weitertransportiert, und am Abhebekeil 17 wird die hergestellte Platte / der hergestellte Film vom Metallband 14 abgehoben. Mit Hilfe der Umlenktrommel 110 kann das Metallband 14 auf eine für den Herstellungsvorgang zweckmäßige Temperatur gebracht werden. Der Vollständigkeit halber wird auch noch darauf hingewiesen, dass die Umlenktrommel 110 angetrieben oder leerlaufend sein kann.

Die Ausführungsbeispiele zeigen mögliche Ausführungsvarianten von Umlenktrommeln 101..110, wobei eine Variationsmöglichkeit aufgrund der Lehre zum technischen Handeln durch gegenständliche Erfindung im Können des auf diesem technischen Gebiet tätigen Fachmannes liegt.

Die in den Figuren 1 bis 9 dargestellten Umlenktrommeln 101..109 können insbesondere beliebig kombiniert werden. Beispielsweise können die in der Fig. 4 vorgesehenen Heizblöcke durch je zwei gegenläufig durchflossene Heizspiralen gebildet sein (Fall b+c). Denkbar wäre auch, dass die in der Fig. 4 dargestellten Heizrohre 2, 5 und 6 je mehr als einen Ein-und Ausgang aufweisen (Fall a+b). Auch die in der Fig. 6 dargestellten Heizrohre 2 und 5 könnten je mehr als einen Ein-und Ausgang aufweisen (Fall a+c). Schließlich könnten die in der Fig. 4 vorgesehenen Heizblöcke durch je zwei gegenläufig durchflossene Heizspiralen gebildet sein, die jeweils mehr als einen Ein-und Ausgang aufweisen (Fall a+b+c).

Insbesondere wird auch festgehalten, dass die dargestellten von Umlenktrommeln 101.. 110 in der Realität auch mehr oder weniger Bestandteile als dargestellt umfassen kann und in den Figuren bisweilen stark vereinfacht dargestellt sind.

Der Ordnung halber sei abschließend darauf hingewiesen, dass die dargestellten Umlenktrommeln 101..110 sowie ihre Bestandteile zum besseren Verständnis ihres Aufbaus darüber hinaus teilweise unmaßstäblich und/oder vergrößert und/oder verkleinert dargestellt wurden.

### Bezugszeichenaufstellung

- 101..110: Umlenktrommel
- 2: Heizrohr
- 3: Verteiler/Verteilerrohr
- 4: Sammler/Sammelrohr
- 5: Heizrohr

- 6: Heizrohr
- 7: Ventil
- 8: Ventil
- 9: Ventil
- 10: Temperatursensor

- 11: Temperatursensor
- 12: Temperatursensor
- 13: Regelung
- 14: Metallband
- 15: (zweite) Umlenkrolle

- 16: Einfülltrichter
- 17: Abhebekeil
- 18: umzuformendes Material (Platte, Film)

## Patentansprüche

1. Umlenktrommel (101..110) für eine Bandgießanlage, umfassend
- einen trommelförmigen Grundkörper und
- zumindest ein unterhalb einer zylinderförmigen Oberfläche der Trommel (101..110) verlegtes Heizrohr (2, 5, 6), wobei das Heizrohr/die Heizrohre (2, 5, 6) je zumindest einen Eingang und je zumindest einen dazu versetzt angeordneten Ausgang aufweist/aufweisen und die Summe der Eingänge und Ausgänge wenigstens drei beträgt,
**gekennzeichnet durch**
- ein steuerbares Ventil (7, 8, 9) an einem Eingang oder Ausgang eines Heizrohrs (2, 5, 6),
- einen Temperatursensor (10, 11, 12) in einem von dem genannten Ventil (7, 8, 9) beeinflussten Bereich/Abschnitt des Heizrohrs (2, 5, 6) respektive der Umlenktrommel (109) und
- eine Regelung (13), deren Eingang für einen Ist-Wert mit dem genannten Temperatursensor (10, 11, 12) und deren Ausgang für eine Stellgröße mit dem genannten Ventil (7, 8, 9) verbunden ist.

2. Umlenktrommel (101..110) nach Anspruch 1, umfassend ein unterhalb einer zylinderförmigen Oberfläche der Trommel (101..110) verlegtes erstes Heizrohr (2), **dadurch gekennzeichnet, dass**
a) das erste Heizrohr (2) zumindest einen Eingang und zumindest einen dazu versetzt angeordneten Ausgang aufweist, wobei die Summe der Eingänge und Ausgänge wenigstens drei beträgt, oder
b) zumindest ein unterhalb der zylinderförmigen Oberfläche der Trommel (101..110) verlegtes zweites Heizrohr (5, 6) vorgesehen ist, wobei Abschnitte des ersten Heizrohrs (2) in dessen Querrichtung einander benachbart sind und Abschnitte des zumindest zweiten Heizrohrs (5, 6) in dessen Querrichtung einander benachbart sind, oder
c) zumindest ein unterhalb der zylinderförmigen Oberfläche der Trommel (101..110) verlegtes zweites Heizrohr (5, 6) vorgesehen ist, wobei Abschnitte des ersten Heizrohrs (2) und des zumindest zweiten Heizrohrs(5, 6) in deren Querrichtung einander benachbart und für einen gegenläufigen Durchfluss eingerichtet sind.

3. Umlenktrommel (102, 104, 105, 109) nach Anspruch 1 oder 2, **dadurch gekennzeichnet, dass** mehrere Eingänge an einen Verteiler respektive ein Verteilrohr (3) und mehrere Ausgänge an einen Sammler respektive an ein Sammelrohr (4) angeschlossen sind.

4. Umlenktrommel (102, 104) nach Anspruch 3, **dadurch gekennzeichnet, dass** der Verteiler / das Verteilrohr (3) beziehungsweise der Sammler / das Sammelrohr (4) innerhalb der Trommel (102, 104) angeordnet sind.

5. Umlenktrommel (105, 109) nach Anspruch 3, **dadurch gekennzeichnet, dass** der Verteiler / das Verteilrohr (3) beziehungsweise der Sammler / das Sammelrohr (4) außerhalb der Trommel (105, 109) angeordnet sind.

6. Umlenktrommel (101..110) nach einem der Ansprüche 1 bis 5, **dadurch gekennzeichnet, dass** das erste Heizrohr (2) und das zumindest eine zweite Heizrohr (5, 6) im Wesentlichen helixförmig oder im Wesentlichen mäanderförmig verlegt ist.

7. Umlenktrommel (101..110) nach einem der Ansprüche 1 bis 6, **dadurch gekennzeichnet, dass** anstelle eines Heizrohrs (2, 5, 6) ein Heizstab vorgesehen ist.

8. Bandgießanlage, umfassend eine Umlenktrommel (101..110) und ein um diese laufendes Metallband (14), **dadurch gekennzeichnet, dass** die Umlenktrommel (101..110) nach einem der Ansprüche 1 bis 7 ausgebildet ist.

## Claims

1. A return pulley (101..110) for a strip casting system, comprising
- a drum-shaped base body and
- at least one heating tube (2, 5, 6) laid below a cylindrical surface of the pulley (101..110), the heating tube/the heating tubes (2, 5, 6) each having at least one inlet and each having at least one outlet arranged offset thereto and the total of the inlets and outlets being at least three,
**characterized by**
- a controllable valve (7, 8, 9) at an inlet or outlet of a heating pipe (2, 5, 6),
- a temperature sensor (10, 11, 12) in a region/section of the heating pipe (2, 5, 6) or the return pulley (109) influenced by said valve (7, 8, 9), and
- a closed-loop control (13), the input of which for an actual value is connected to said temperature sensor (10, 11, 12) and the output of which for a control variable is connected to said valve (7, 8, 9).

2. The return pulley (101..110) according to claim 1, comprising a first heating tube (2) laid below a cylindrical surface of the pulley (101..110),
**characterized in that**
a) the first heating pipe (2) has at least one inlet and at least one outlet arranged offset thereto, wherein the total of inlets and outlets is at least three, or
b) at least one second heating pipe (5, 6) laid below the cylindrical surface of the pulley (101..110) is provided, wherein sections of the first heating pipe (2) are arranged next to one another in the transverse direction thereof and sections of the at least second heating pipe (5, 6) are arranged next to one another in the transverse direction thereof, or
c) at least one second heating pipe (5, 6) laid below the cylindrical surface of the pulley (101..110) is provided, wherein sections of the first heating pipe (2) and the at least second heating pipe (5, 6) are set up next to one another in the transverse direction thereof and for a flow in the opposite direction.

3. The return pulley (102, 104, 105, 109) according to claim 1 or 2, **characterized in that** a plurality of inlets are attached to a distributor or a distributor pipe (3) and a plurality of outlets are attached to a collector or to a collector pipe (4).

4. The return pulley (102, 104) according to claim 3, **characterized in that** the distributor/the distributor pipe (3) or the collector/the collector pipe (4) are arranged inside the pulley (102, 104).

5. The return pulley (105, 109) according to claim 3, **characterized in that** the distributor/the distributor pipe (3) or the collector/the collector pipe (4) are arranged outside the pulley (105, 109).

6. The return pulley (101..110) according to one of claims 1 to 5, **characterized in that** the first heating pipe (2) and the at least one second heating pipe (5, 6) is laid in a substantially helical or substantially meandering manner.

7. The return pulley (101..110) according to one of claims 1 to 6, **characterized in that** instead of a heating pipe (2, 5, 6), a heating bar is provided.

8. A strip casting system, comprising a return pulley (101..110) and a metal strip (14) running around the same, **characterized in that** the return pulley (101..110) is constructed according to one of claims 1 to 7.

## Revendications

1. Tambour de renvoi (101...110) pour une installation de coulée en bande, comprenant
- un corps de base en forme de tambour et
- au moins un tube chauffant (2, 5, 6) posé au-dessous d'une surface de forme cylindrique du tambour (101...110), le tube chauffant /les tubes chauffants (2, 5, 6) présentant chacun au moins une entrée et chacun au moins une sortie disposée de façon décalée par rapport à l'entrée, et la somme des entrées et des sorties étant au moins égale à trois, **caractérisé par**
- une vanne (7, 8, 9), pouvant être commandée, à une entrée ou une sortie d'un tube chauffant (2, 5, 6),
- un capteur de température (10, 11, 12) dans une zone/un tronçon du tube chauffant (2, 5, 6), respectivement du tambour de renvoi (109), qui est influencé(e) par ladite vanne (7, 8, 9), et
- une régulation (13) dont l'entrée pour une valeur effective est raccordée audit capteur de température (10, 11, 12) et dont la sortie pour une grandeur de réglage est raccordée à ladite vanne (7, 8, 9).

2. Tambour de renvoi (101...110) selon la revendication 1, comprenant un premier tube chauffant (2) posé au-dessous d'une surface de forme cylindrique du tambour (101...110), **caractérisé en ce que**
a) le premier tube chauffant (2) présente au moins une entrée et au moins une sortie disposée de façon décalée par rapport à l'entrée, la somme des entrées et des sorties étant au moins égale à trois, ou
b) au moins un deuxième tube chauffant (5, 6) posé au-dessous de la surface de forme cylindrique du tambour (101...110) est prévu, des tronçons du premier tube chauffant (2) étant voisins les uns des autres dans sa section transversale, et des tronçons du au moins deuxième tube chauffant (5, 6) étant voisins les uns des autres dans sa section transversale, ou
c) au moins un deuxième tube chauffant (5, 6) posé au-dessous de la surface de forme cylindrique du tambour (101...110) est prévu, des tronçons du premier tube chauffant (2) et du deuxième tube chauffant (5, 6) au moins au nombre de deux étant voisins les uns des autres dans leur section transversale et aménagés pour un écoulement en sens inverse.

3. Tambour de renvoi (102, 104, 105, 109) selon la revendication 1 ou 2, **caractérisé en ce que** plusieurs entrées sont raccordées à un distributeur, respectivement à un tube de distribution (3), et plusieurs sorties sont raccordées à un collecteur, respectivement un tube collecteur (4).

4. Tambour de renvoi (102, 104) selon la revendication 3, **caractérisé en ce que** le distributeur / le tube de distribution (3) ou respectivement le collecteur / le tube collecteur (4) sont disposés à l'intérieur du tambour (102, 104).

5. Tambour de renvoi (105, 109) selon la revendication 3, **caractérisé en ce que** le distributeur / le tube de distribution (3) ou respectivement le collecteur / le tube collecteur (4) sont disposés à l'extérieur du tambour (105, 109).

6. Tambour de renvoi (101...110) selon l'une des revendications 1 à 5, caractérisé à ce que le premier tube chauffant (2) et le au moins deuxième tube chauffant (5, 6) sont posés essentiellement sous une forme hélicoïdale ou essentiellement sous une forme de méandre.

7. Tambour de renvoi (101...110) selon l'une des revendications 1 à 6, caractérisé à ce que, à la place d'un tube chauffant (2, 5, 6), il est prévu une barre chauffante.

8. Installation de coulée en bande, comprenant un tambour de renvoi (101...110) et une bande métallique (14) tournant autour de celui-ci, **caractérisée en ce que** le tambour de renvoi (101... 110) est constitué selon l'une des revendications 1 à 7.
